# EUROPÄISCHE PATENTSCHRIFT

(11) **EP 1 306 039 B1**
(45) Veröffentlichungstag und Bekanntmachung des Hinweises auf die Patenterteilung: **26.01.2005**
(21) Anmeldenummer: 02020709.8
(22) Anmeldetag: 14.09.2002
(51) Int. Cl.: A47J 31/08

(54) **Filterpapiereinsatz für ein Filtergefäss zur Herstellung von Aromaauszügen aus Kaffee oder Tee**
Filter paper inlay for a filter basket for preparing coffee- or tea-infusions
Papier filtrant pour un récipient filtrant pour préparer des boissons aromatisées de café ou de thé

(30) Priorität: 26.10.2001 DE 20117368 U
(43) Veröffentlichungstag der Anmeldung: 02.05.2003
(73) Patentinhaber: Melitta SystemService GmbH & Co., Kommanditgesellschaft, 32429 Minden-Dützen (DE)
(72) Erfinder: Brindöpke, Dieter, 32425 Minden (DE)
(74) Vertreter: Dantz, Jan Henning

(56) Entgegenhaltungen:
- EP-A- 0 442 061
- WO-A-99/45829

## Beschreibung

Die vorliegende Erfindung betrifft einen Filterpapiereinsatz zur Herstellung von Aromaauszügen aus Kaffee oder Tee, wobei der genutzte Innenraum des Filtergefäßes und damit auch der Filterpapiereinsatz im Gebrauch eine pyramidenartige Form aufweisen und der Filterpapiereinsatz aus einem einstückigen und längs einer Faltkante zusammengefalteten Zuschnitt besteht, wobei die beiden Materiallagen längs einer Naht, vorzugsweise einer Prägenaht, miteinander verbunden sind.

Ein Filterpapiereinsatz der gattungsgemäßen Art ist aus der EP 0 442 061 B1 bekannt.

In der genannten Literaturstelle ist auch erwähnt, daß der Wunsch besteht, Filterpapiereinsätze der gattungsgemäßen Art sowohl für Filtergefäße mit abgeschrägten oder abgerundeten Eckbereichen verwenden zu können wie auch für solche Filtergefäße, die derartige Abschrägungen oder Abrundungen im Eckbereich nicht aufweisen.

Um diesem Wunsch Rechnung tragen zu können, hat man bislang entsprechende Filterpapiereinsätze in ihren Eckbereichen mit Falzungen oder Falzlinien ausgestattet, die es ermöglichen sollen, einen derartigen Filterpapiereinsatz problemlos bei den oben angegebenen, unterschiedlichen Typen von Filtergefäßen benutzen zu können.

Die Anbringung von Falzlinien in allen vier Eckbereichen des Filterpapiereinsatzes erfordert herstellungstechnisch einen sehr großen Aufwand, da zwei Rillstationen benötigt werden, um alle Falzlinien anzubringen.

Der vorliegenden Erfindung liegt die Aufgabe zugrunde, einen Filterpapiereinsatz der gattungsgmäßen Art zu schaffen, der einerseits der Forderung nach Einsatzmöglichkeit in unterschiedlich gestalteten Filtergefäßen entspricht und der andererseits einfach und kostengünstig herstellbar ist.

Diese Aufgabe wird erfindungsgemäß dadurch gelöst, daß die beiden Materiallagen ausschließlich benachbart der Naht mit Falzlinien ausgestattet sind.

Es hat sich gezeigt, daß der Nahtbereich eines Filterpapiereinsatzes bei dessen Verwendung in einem Filtergefäß mit abgeschrägten oder abgerundeten Eckbereichen als problematisch anzusehen ist hinsichtlich der Anpassung an die beschriebene Form des Filtcrgefäßes. Dies liegt an der Versteifung, die sich durch die Naht, insbesondere eine Prägenaht, in diesem angesprochenen Bereich ergibt.

Werden hier, wie mit der vorliegenden Erfindung vorgeschlagen wird, entsprechende Falzlinien in die Materiallagen des Filterpapiereinsatzes eingebracht, kann der Nahtbereich wieder problemlos an eine abgerundete oder abgeschrägte Form angepaßt werden, im übrigen Eckbereich ist dies nicht erforderlich, da aufgrund der Flexibilität des Filterpapiermaterials auch ohne Falzlinien eine ausreichende Anpassung des Filterpapiereinsatzes an Filtergefäße mit abgeschrägten Ecken oder abgerundeten Ecken möglich ist.

Fertigungstechnisch läßt sich ein erfindungsgemäßer Filterpapiereinsatz mit relativ einfachen und preiswerten Mitteln herstellen, insbesondere wird nur eine Rillstation für das Anbringen dcr Falzlinien im Nahtbcreich benötigt.

Somit entfällt schon maschinentechnisch komplett die Notwendigkeit des Einsatzes einer zweiten Rillstation mit allen sich daraus ergebenden, positiven wirtschaftlichen Folgen. Demzufolge ist auch die Wartung einer entsprechenden Einrichtung zur Herstellung derartiger Filterpapiereinsätze erheblich einfacher und preiswerter.

Entsprechend zweckmäßig ist eine Ausgestaltung eines erfindungsgemäßen Filterpapiereinsatzes, bei dem die Falzlinien mit der Naht einen spitzen Winkel einschließen, da sich hierdurch eine gute Anpassung an die vorstehend beschriebene geometrische Form der Eckabschrägung von Filtergefäßen ergibt.

Ein Ausführungsbeispiel der Erfindung ist in den beigefügten Zeichnungen dargestellt und wird im folgenden näher beschrieben.

Es zeigen:
- Figur 1: eine Draufsicht auf einen flach liegenden Filterpapiereinsatz gemäß vorliegender Erfindung,
- Figur 2: eine perspektivische Darstellung eines Filtergefäßes, in dem ein erfindungsgemäßer Filterpapiereinsatz zum Einsatz kommt.

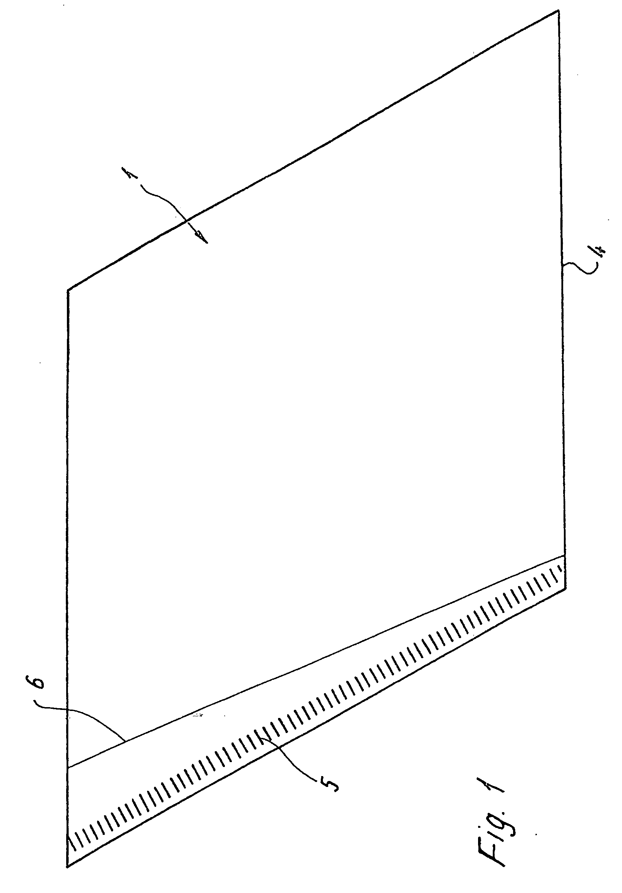

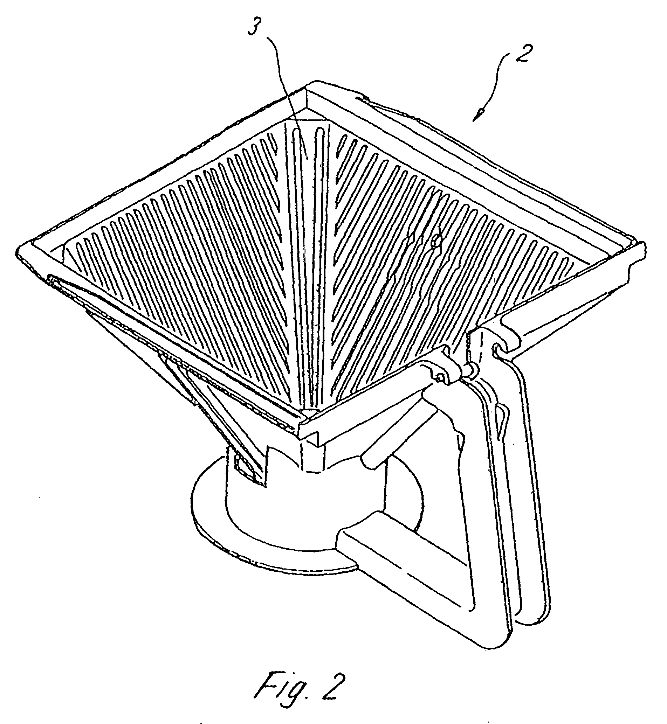

Der in Figur 1 dargestellte und mit dem Bezugszeichen 1 versehene Filterpapiereinsatz ist für den Einsatz in einem Filtergefäß 2 nach der Figur 2 vorgesehen.

Das Filtergefäß 2 weist einen pyramidenartigen Innenraum auf, wobei die Ecken dieses Innenraumes mit Abschrägungen 3 versehen sind.

Der Filterpapiereinsatz 1 ist in an sich bekannter und deshalb nicht weiter dargestellter Weise aus einem einstückigen Zuschnitt hergestellt, wobei der besagte Zuschnitt längs einer Faltkante 4 zusammengefaltet ist, so daß zwei Materiallagen von Filterpapier übereinander liegen. Über eine Naht, vorzugsweise eine Prägenaht 5, sind die beiden angesprochenen, übereinander liegenden Materiallagen miteinander verbunden.

Hierdurch ist ein tütenartiger Filterpapiereinsatz 1 geschaffen, der hinsichtlich seiner Winkelgeometrie an die Form des Innenraumes des Filtergefäßes 2 angepaßt ist.

Um den Filterpapiereinsatz 1 nach der Figur 1 insbesondere im Bereich seiner Prägenaht 5 und in abgeschrägten Eckbereichen 3 eines Filtergefäßes 2 anpassen zu können, sind erfindungsgemäß ausschließlich im Bereich dieser Prägenaht 5 in beiden Materiallagen Falzlinien 6 eingebracht, die ein Einfalten der durch die Naht 5 versteiften Längs- oder Eckkante des Filterpapiereinsatz 1 ermöglichen, wodurch die Anpassung an eine abgeschrägte Ecke eines Filtergefäßes 2 ohne weiteres möglich ist.

In den übrigen Eckbereichen gestattet die Flexibilität des Filterpapieres ohnehin eine nahezu ideale Anpassung auch an abgeschrägte Eckbereiche eines Filtergefäßes, so daß hier auf die kostspielige Anbringung von Falzlinien verzichtet werden kann.

Wie sich aus Figur 2 ergibt, verjüngt sich der abgeschrägte Eckbereich 3 eines Filtergefäßes 2 von der Oberseite zur unteren Auslaufseite des Filtergefäßes 2, entsprechend angepaßt ist der Verlauf der Falzlinien 6 in bezug auf die Prägenaht 5, und zwar derart, daß diese Falzlinien 6 mit der Prägenaht 5 einen spitzen Winkel einschließen. Beim Zusammenfalten des Filterpapiereinsatzes 1 im Bereich der Prägenaht 5 ergibt sich somit eine geometrisch optimale Anpassung an den nach unten schmaler werdenden, abgeschrägten Eckbereich eines Filtergefäßes.

Sofern der Filterpapiereinsatz 1 in einem Filtergefäß zum Einsatz kommt, bei dem die Eckbereiche weder eine Abschrägung noch eine Abrundung oder dergleichen aufweisen, wird der Filterpapiereinsatz 1 ohne Ausnutzung der Falzlinien genutzt.

Zweckmäßigerweise sind die Falzlinien 6 in den beiden Materiallagen des Filterpapiereinsatzes 1 nach dem Zusammenfalten des Zuschnittes eingebracht, wodurch sich für die beiden Falzlinien in den beiden Materiallagen die gleiche Orientierung der Falzrichtung ergibt, d. h., daß beide Falzlinien 6 gleichsinnig in das entsprechende Material eingeprägt sind.

Hierdurch wird das bei Bedarf erforderliche Umfalten des zwischen den Falzlinien 6 und der Prägenaht 5 liegenden Bereiches erheblich vereinfacht.

## Patentansprüche

1. Filterpapiereinsatz für ein Filtergefäß zur Herstellung von Aromaauszügen aus Kaffee oder Tee, wobei der genutzte Innenraum des Filtergefäßes und damit auch der Filterpapiereinsatz im Gebrauch eine pyramidenartige Form aufweisen und der Filterpapiereinsatz aus einem einstückigen und längs einer Faltkante zusammengefalteten Zuschnitt besteht, wobei die beiden Materiallagen längs einer Naht, vorzugsweise einer Prägenaht, miteinander verbunden sind, **dadurch gekennzeichnet, daß** die beiden Materiallagen ausschließlich benachbart der Naht (5) mit Falzlinien (6) ausgestattet sind.

2. Filterpapiereinsatz nach Anspruch 1, **dadurch gekennzeichnet, daß** die Falzlinien (6) mit der Naht (5) einen spitzen Winkel einschließen.

3. Filterpapiereinsatz nach Anspruch 1 oder 2, **dadurch gekennzeichnet, daß** die beiden Falzlinien (6) in den beiden Materiallagen gleichsinnig in die beiden Materiallagen eingeprägt sind.

## Claims

1. Filter paper insert for a filter vessel for preparing aroma extracts of coffee or tea, the utilized interior of the filter vessel and thus also the filter paper insert being of pyramidal shape during use and the filter paper insert comprising a single-piece blank which is folded together along a folding edge, the two material layers being connected to one another along a seam, preferably a stamped seam, **characterized in that** the two material layers are provided with folding lines (6) exclusively adjacent to the seam (5).

2. Filter paper insert according to Claim 1, **characterized in that** the folding lines (6) enclose an acute angle with the seam (5).

3. Filter paper insert according to Claim 1 or 2, **characterized in that** the two folding lines (6) in the two material layers are stamped into the two material layers in the same direction.

## Revendications

1. Filtre en papier destiné à un récipient filtrant pour la préparation d'extraits aromatiques de café ou de thé, l'espace intérieur utilisé du récipient filtrant et, par conséquent, également le filtre en papier présentant, lorsqu'ils sont utilisés, une forme pyramidale, et le filtre en papier étant constitué d'une partie découpée en une seule pièce, repliée le long d'une arête de pliage, les deux couches de matière étant reliées le long d'un joint, de préférence d'un joint obtenu par frappage, **caractérisé en ce que** les deux couches de matière sont pourvues de lignes de pliage (6) à proximité du joint (5) exclusivement.

2. Filtre en papier selon la revendication 1, **caractérisé en ce que** les lignes de pliage (6) forment un angle aigu avec le joint (5).

3. Filtre en papier selon la revendication 1 ou 2, **caractérisé en ce que** les deux lignes de pliage (6) des deux couches de matière sont frappées dans le même sens dans les deux couches de matière.
